(19) Europäisches Patentamt
European Patent Office
Office européen des brevets

(11) Numéro de publication : **0 311 527 B1**

(12) **FASCICULE DE BREVET EUROPEEN**

(45) Date de publication du fascicule du brevet :
**10.04.91 Bulletin 91/15**

(51) Int. Cl.⁵ : **B62D 61/12**

(21) Numéro de dépôt : **88402542.0**

(22) Date de dépôt : **07.10.88**

(54) **Dispositif de commande de relevage et de descente d'un essieu auxiliaire suspendu de vehicule.**

(30) Priorité : 09.10.87 FR 8713973

(43) Date de publication de la demande :
**12.04.89 Bulletin 89/15**

(45) Mention de la délivrance du brevet :
**10.04.91 Bulletin 91/15**

(84) Etats contractants désignés :
**DE GB**

(56) Documents cités :
**EP-A- 0 160 844**
**EP-A- 0 238 891**
**DE-U- 1 932 988**
**FR-A- 2 115 230**
**FR-A- 2 281 849**
**GB-A- 2 081 655**

(73) Titulaire : **RENAULT VEHICULES INDUSTRIELS Société Anonyme dite:**
**129 rue Servient "La Part Dieu"**
**F-69003 Lyon (FR)**

(72) Inventeur : **Tripier, Jean-Pierre**
**Rue des Chouchères**
**F-38790 Saint Georges d'Esperanche (FR)**
Inventeur : **Saint-Oyant, Gérard**
**6, Boulevard Charles de Gaulle**
**F-69600 Oullins (FR)**

(74) Mandataire : **Ernst-Schonberg, Michel**
**REGIE NATIONALE DES USINES RENAULT (S. 0267) 8 & 10, avenue Emile Zola**
**F-92109 Boulogne Billancourt Cédex (FR)**

## Description

L'invention concerne un dispositif de commande de relevage et de descente d'un essieu auxiliaire suspendu de véhicule automobile asservi à une variation de la charge, selon le préambule de la revendication 1. Un tel dispositif est connu de la publication GB-A-2 081 655.

Dans ce mode de construction on peut s'imaginer qu'une force manuelle exagérée exercée sur le distributeur à commande manuelle pourrait surmonter la pression de pilotage cherchant à neutraliser cette commande, dans le but de relever l'essieu auxiliaire malgré une surcharge de l'essieu moteur. Ce risque est évité par l'invention grâce à la caractéristique définie par la partie caractérisante de la revendication 1.

D'autres caractéristiques et avantages de l'invention seront mieux compris à la lecture de la description qui suit en se référant aux dessins annexés, sur lesquels :

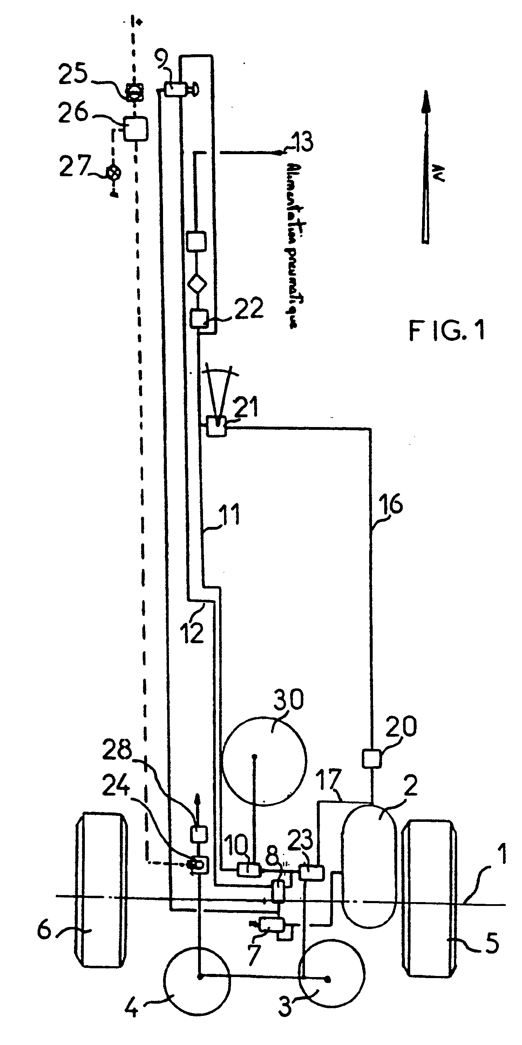

- la figure 1 représente un schéma de l'installation du dispositif vue en plan ;
- la figure 2 représente le circuit pneumatique du dispositif dans la phase de relevage de l'essieu auxiliaire ;

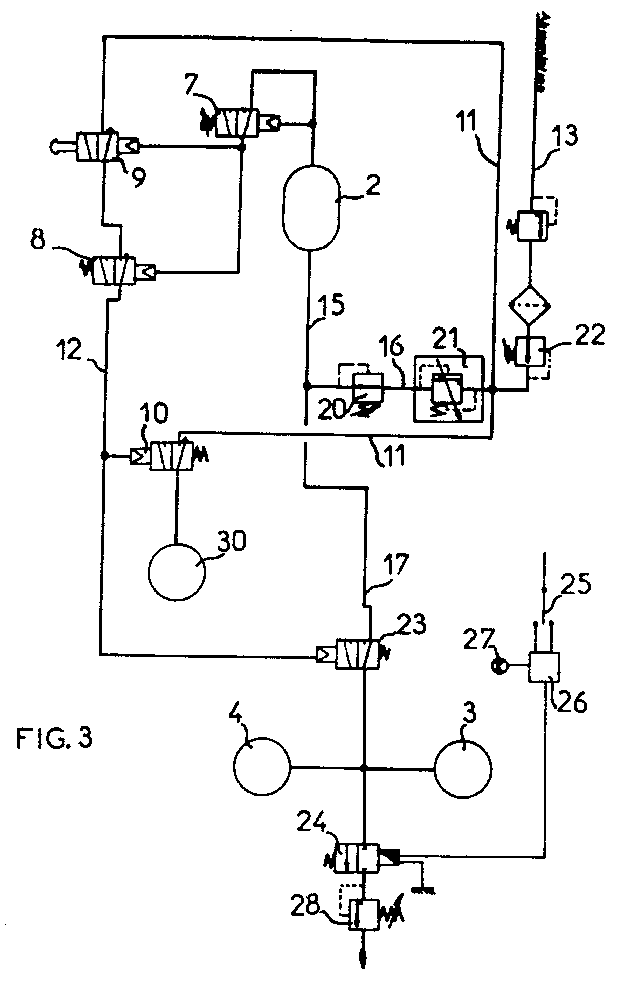

- la figure 3 représente le circuit pneumatique du dispositif dans la phase d'utilisation de l'essieu auxiliaire.

L'installation de suspension pneumatique pour l'essieu auxiliaire 1 est représentée par une combinaison de composants symbolisés graphiquement conformément à la norme ISO 1219.

L'essieu 1 est alimenté en air comprimé à partir d'un réservoir de pression 2. De chaque côté du châssis se trouve un coussin de suspension 3, 4 de l'essieu 1.

Entre les roues 5, 6 de l'essieu 1 est placé un premier distributeur 3/2, 7 commandé par la pression du réservoir 2 avec ressort de rappel qui fournit la pression de commande à une vanne d'isolation 8 et à un deuxième distributeur 9 à commande manuelle de relevage. Le distributeur 9 et une vanne de décharge 10 sont en liaison avec la ligne d'alimentation 13 par un canal 11.

Une entrée de commande de la vanne 10 est alimentée par un canal 12 sur le trajet duquel se trouve la vanne d'isolation 8.

Un coussin moteur 30 qui assure le relevage ou la descente de l'essieu 1 est alimenté par le canal 11 et la vanne 10 ou mis à l'atmosphère par un clapet de non retour non représenté qui maintient dans le coussin 30 une pression résiduelle. Le réservoir 2 est branché, par ailleurs, au moyen d'un conduit 15 sur deux branches de contrôle 16, 17 par l'intermédiaire de clapets de non retour avec étranglement non représentés.

La branche 16 contient un détendeur 20 et une valve de détection de charge 21 réglable. La valve 21 est constituée par un réducteur de pression proportionnel à commande tournante lié au châssis suspendu du véhicule. La pression de sortie de la valve 21 alimente le détendeur 20 tandis que sa pression d'entrée est fournie par la pression d'un circuit de servitude incluant notamment un détendeur 22 qui limite la pression dans le coussin 30.

La branche 17 alimente une deuxième vanne 23 munie d'une entrée de commande branchée en parallèle avec celle de la vanne 10.

La voie de sortie de la vanne 23 alimente les éléments de suspension 3, 4, tandis qu'une électrovanne 24 est commandée par un circuit de temporisation de délestage incluant un interrupteur 25, un boîtier de temporisation réglable 26 et un voyant lumineux 27 susceptibles d'être placés dans la cabine de conduite du véhicule.

L'électrovanne 24 alimente en position ouverte une valve de limitation de pression 28 qui limite la surcharge sur l'essieu moteur.

Les états de fonctionnement du dispositif sont décrits ci-après.

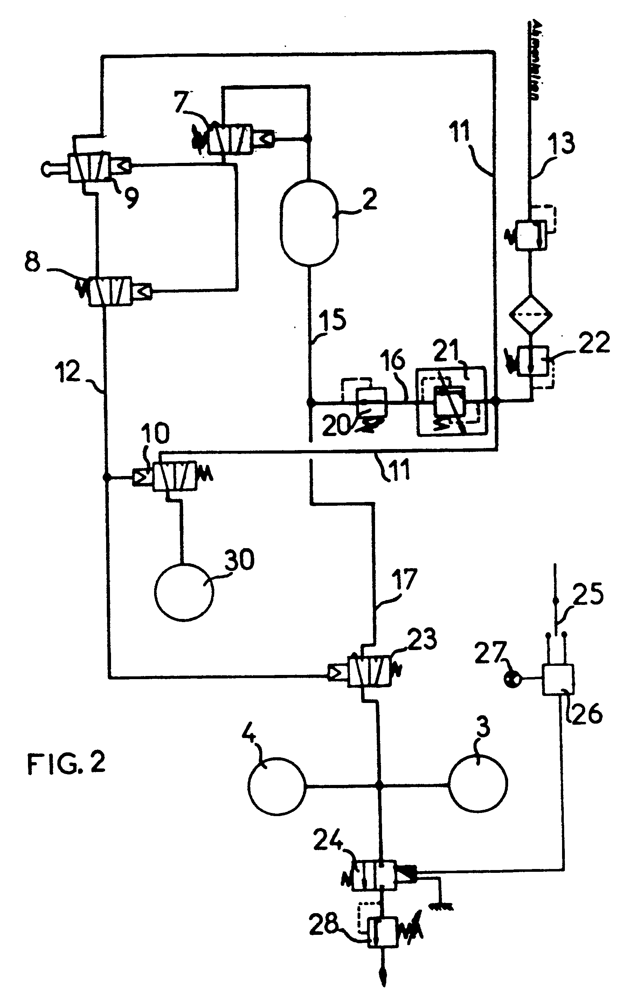

Lorsque l'essieu auxiliaire est relevé ainsi que le montre la figure 2, la pression du réservoir 2 s'exerce notamment sur le pilotage du distributeur 7.

Dans l'hypothèse d'une augmentation de la pression dans le réservoir 2 sous l'effet d'une surcharge, le distributeur 7 bascule dans son état d'alimentation des moyens de pilotage du distributeur à commande manuelle 9 et de la vanne 8.

La commande manuelle du distributeur 9 est neutralisée ainsi que la pression de commande de la vanne 23.

Sous l'effet de la surcharge, la valve 21 s'ouvre et le premier distributeur 7 bascule dans le sens autorisant la commande de la vanne 8 et du distributeur 9 en position de mise à l'atmosphère.

La pression de pilotage de la vanne 10 disparaît et celle-ci bascule dans son autre position pour permettre la mise à l'atmosphère du coussin 30 et la descente de l'essieu 1. Mais ce mode de fonctionnement provoque également le basculement de la vanne 23 dans le sens d'une mise en pression des coussins de suspension 3, 4.

Lorsque l'adhérence au sol des roues motrices du véhicule est insuffisante, le dispositif permet de réduire la pression dans les coussins de suspension 3, 4 et de transférer une fraction de la charge sur l'essieu moteur. A cet effet les coussins de suspension 3, 4 et la vanne 23 en position ouverte sont en communication avec un électrovanne 24 à ouverture temporisée qui alimente la valve de limitation de pression 28. La valve 28 constitue de la sorte un organe de sécurité contre une surcharge de l'essieu moteur.

## Revendications

1. Dispositif de commande de relevage et de descente d'un essieu auxiliaire (1) suspendu de véhicule automobile asservi à une variation de la charge, qui comporte une suspension à fluide, un réservoir de pression (2), des moyens détecteurs des variations de la charge sous forme d'une valve de détection (21) de charge, des éléments de suspension (3, 4) de l'essieu auxiliaire (1) ainsi qu'un coussin moteur (30) qui agissent en réponse aux moyens détecteurs pour commander le mouvement de l'essieu auxiliaire (1), et un premier distributeur (7) piloté qui délivre une pression de pilotage à un deuxième distributeur (9) à commande manuelle de relevage dans le sens d'une neutralisation de la commande manuelle dans le but d'autoriser la descente automatique de l'essieu lorsque la pression délivrée par la valve de détection (21) de charge dépasse une pression de seuil correspondant à une surcharge sur l'essieu moteur, caractérisé par le fait que la pression de pilotage délivrée par le premier distributeur (7) piloté agit également sur une vanne (8) d'isolation placée en aval du deuxième distributeur (9) à commande manuelle, dans le sens d'une mise à l'atmosphère de la pression de pilotage délivrée par celui-ci.

2. Dispositif selon la revendication 1, caractérisé par le fait que les éléments de suspension (3, 4) sont en communication de pression avec une deuxième vanne (23) d'alimentation d'un électrovanne (24) à ouverture temporisée piloté par un temporisateur (26) dans le but de décomprimer lesdits éléments de suspension (3, 4) et de transférer une fraction de la charge sur l'autre essieu moteur.

3. Dispositif selon la revendication 2, caractérisé par le fait que l'électrovanne (24) à ouverture temporisée est montée en dérivation avec les éléments de suspension (3, 4) de l'essieu et alimente un limiteur de pression (28) dans le but de protéger l'essieu moteur contre les surcharges.

## Ansprüche

1. Steuervorrichtung für das Heben und Senken einer an einem Kraftfahrzeug aufgehängten Hilfsachse (1), als Funktion einer Laständerung, mit einer Fluidfederung, einem Druckbehälter (2), einer Meßanordnung für die Laständerungen in Form eines Lastmeßventils (21), mit Federungselementen (3, 4) für die Hilfsachse (1) und mit einem Druckmotor (30), die auf Signale der Meßanordnung dergestalt reagieren, daß sie die Bewegungen der Hilfsachse (1) steuern und mit einem gesteuerten Verteiler (7), der einen Steuerdruck liefert an einen zweiten manuell gesteuerten Verteiler (9) zum Heben in Richtung einer Neutralisierung der manuellen Steuerung, um so das automatische Senken der Achse zu ermöglichen, wenn der vom Lastmeßventil (21) gelieferte Druck einen Schwelldruck überschreitet entsprechend einer Überlast auf der Motorachse, dadurch gekennzeichnet, daß der vom ersten gesteuerten Verteiler (7) gelieferte Steuerdruck außerdem auf ein Isolierventil (8) wirkt, das stromabwärts des zweiten manuell gesteuerten Ventils (9) angeordnet ist, in Richtung einer Verbindung mit der Atmosphäre des von ihm gelieferten Steuerdrucks.

2. Vorrichtung nach Anspruch 1, dadurch gekennzeichnet, daß die Federungselemente (3, 4) in Druckverbindung mit einem zweiten Ventil (23) stehen zur Versorgung eines Elektroventils (24) mit zeitweiser Öffnung, gesteuert durch einen Zeitschalter (26), um den Druck in den Federungselementen (3, 4) zu vermindern und einen Teil der Last auf die Motorachse zu verlagern.

3. Vorrichtung nach Anspruch 2, dadurch gekennzeichnet, daß das Elektroventil (24) mit zeitweiser Öffnung als Brücke zu den Federungselementen (3, 4) der Achse geschaltet ist und einen Druckbegrenzer (28) versorgt, um die Motorachse gegen Überlast zu schützen.

## Claims

1. A control device for the raising and lowering of an suspended auxiliary axle (1) of an automobile vehicle controlled by a load variation, comprising a fluid suspension, a pressure reservoir (2), means for detecting the load variations in the form of a load detection valve (21), suspension members (3, 4) for the auxiliary axle (1) and an actuating cushion (30) which act in response to the detection means in order to control the movement of the auxiliary axle (1) and a first controlled distributor (7) which supplies a control pressure to a second distributor (9) with a manual control for raising for the purposes of a neutralization of the manual control so as to allow the automatic lowering of the axle when the pressure supplied by the load detection valve (21) exceeds a threshold pressure corresponding to an overload on the drive axle, characterized in that the control pressure supplied by the first controlled distributor (7) also acts on an isolation valve (8) disposed downstream of the second manually controlled distributor (9) for the purposes of a connection to atmosphere of the control pressure supplied by the latter.

2. A device as claimed in claim 1, characterized in that the suspension members (3, 4) are in pressure communication with a second valve (23) supplying a solenoid valve (24) with timed opening driven by a timer (26) in order to decompress these suspension members (3, 4) and to transfer a fraction of the load to the drive axle.

3. A device as claimed in claim 2, characterized in that the solenoid valve with timed opening (24) is disposed branched with respect to the suspension members (3, 4) of the axle and supplies a pressure limiter (28) in order to protect the drive axle against overloads.

FIG. 1

FIG. 2

FIG. 3